# EUROPÄISCHE PATENTSCHRIFT

(11) **EP 3 698 440 B1**
(45) Veröffentlichungstag und Bekanntmachung des Hinweises auf die Patenterteilung: **20.08.2025**
(21) Anmeldenummer: 18768859.3
(22) Anmeldetag: 10.09.2018
(51) Int. Cl.: H01R 13/627, H01R 13/629, H01R 13/74

(54) **BEFESTIGUNGSKLEMME**
FASTENING CLAMP
PINCE DE FIXATION

(30) Priorität: 17.10.2017 DE 102017124143
(43) Veröffentlichungstag der Anmeldung: 26.08.2020
(73) Patentinhaber: Phoenix Contact GmbH & Co. KG, 32825 Blomberg (DE)
(72) Erfinder: KLOPPENBURG, Christian, 33142 Büren Wewelsburg (DE); HABIROV, Dennis, 33613 Bielefeld (DE); STRATO, Michael, 32839 Steinheim (DE)
(74) Vertreter: Gesthuysen Patentanwälte
(86) Internationale Anmeldenummer: PCT/EP2018/074312
(87) Internationale Veröffentlichungsnummer: WO 2019/076537

(56) Entgegenhaltungen:
- EP-A1- 0 572 012
- EP-A1- 1 655 813
- EP-A1- 3 176 804
- WO-A2-2011/054743
- DE-A1- 102005 062 059
- DE-A1- 102012 011 676
- DE-B4- 102005 062 059
- DE-B4- 102010 045 913
- US-A- 5 899 763
- US-B1- 7 473 124

## Beschreibung

Die Erfindung betrifft eine Befestigungsklemme zur Fixierung eines aus mehreren Reihenklemmen bestehenden Reihenklemmenblocks in einer Wandöffnung einer Gehäusewand, mit einem Klemmengehäuse und mit mindestens einem Klemmelement, wobei das Klemmelement eine Klemmfläche aufweist. Daneben betrifft die Erfindung noch eine Baueinheit bestehend aus zwei Befestigungsklemmen und mehreren nebeneinander angeordneten Reihenklemmen.

Elektrische Reihenklemmen werden seit vielen Jahren millionenfach bei der Verdrahtung elektrischer Anlagen und Geräte verwendet. Die Klemmen werden häufig auf Tragschienen aufgerastet, die in einer Mehrzahl in einem Schaltschrank angeordnet sein können. Daneben können Reihenklemmen aber auch alleine oder in der Regel zu mehreren als Reihenklemmenblock in einer Wandöffnung, insbesondere in einer Öffnung in einer Schaltschrankwand befestigt sein. Dies hat den Vorteil, dass die eine Seite der Klemmen, die Bedienerseite, von außerhalb des Schaltschranks zugänglich ist, ohne dass der Schaltschrank geöffnet werden muss, während die andere Seite der Klemme, die Anschlussseite, nur bei geöffnetem Schaltschrank zugänglich ist. Dadurch kann sichergestellt werden, dass niemand unbefugt an die Verdrahtung gelangen und diese manipulieren kann.

Elektrische Reihenklemmen sind in der Regel Verbindungsklemmen, so dass sie mindestens zwei Leiteranschlusselemente aufweisen, die über eine elektrisch leitende Verbindungsschiene, den Strombalken, elektrisch miteinander verbunden sind. Neben diesem Grundtyp der Reihenklemmen, der häufig auch als Durchgangsklemme bezeichnet wird, gibt es eine Vielzahl von weiteren Reihenklemmentypen, die speziell an die jeweiligen Anwendungsfälle angepasst sind. Als Beispiel seien Schutzleiterklemmen, Messertrennklemmen und Installationsklemmen genannt.

In der Schalt-, Mess- und Regeltechnik sind Durchgangsklemmen mit Trennmöglichkeit der Standard. Die bei der elektrischen Reihenklemme realisierte Trennmöglichkeit, d. h. die in dem Strombalken vorgesehene Trennstelle ermöglicht es, unterschiedliche Stecker mit unterschiedlichen Funktionen in das Klemmengehäuse der Reihenklemme einzustecken, die dann an der Trennstelle den Strombalken kontaktieren. Als Stecker können neben einfachen Trennsteckern oder Durchgangsverbindern insbesondere auch Prüfstecker verwendet werden, die spezielle Bauelemente aufweisen können und ein Überprüfen der ordnungsgemäßen Funktion des an die Reihenklemme angeschlossenen Stromkreises ermöglichen. Da elektrische Reihenklemmen in der Regel scheibenförmig ausgebildet sind, werden sie meist mit mehreren anderen elektrischen Reihenklemmen zu einem Reihenklemmenblock zusammengesteckt. In einen solchen Reihenklemmenblock können dann eine der Anzahl der Reihenklemmen entsprechende Anzahl an Prüfsteckern eingesteckt werden. Reihenklemmen mit Trennstellen werden insbesondere zum Anschluss von Strom- und Spannungswandlern eingesetzt. Ein wichtiges Funktionsmerkmal besteht dabei darin, dass ein angeschlossener Stromwandler kurzgeschlossen wird, wenn der Sekundärkreis von der Last getrennt wird.

Aus der DE 10 2006 052 894 A1 sind eine Reihenklemme, ein Prüfstecker sowie ein aus einer Mehrzahl von nebeneinander angeordneten Reihenklemmen und einer entsprechenden Anzahl von Prüfsteckern bestehender Prüfklemmblock bekannt. Die einzelnen Reihenklemmen weisen jeweils zwei Strombalken auf, deren Kontaktabschnitte einander kontaktieren, wenn der Stecker eines Prüfsteckers nicht in den von den Kontaktabschnitten gebildeten Kontaktbereich eingesteckt ist. Ist der Stecker eines Prüfsteckers in den Kontaktbereich vollständig eingesteckt, so werden die beiden Kontaktabschnitte durch den Stecker voneinander getrennt, wobei der Stromfluss dann über den Stecker geführt wird, so dass ein Testvorgang durchgeführt werden kann. Die Reihenklemme und der zugeordnete Prüfstecker arbeiten somit nach dem Öffner-Prinzip, da die Verbindung zwischen den beiden Strombalken der Reihenklemme geöffnet wird, wenn der Stecker, der zwei voneinander isolierte Metallabschnitte aufweist, in den Kontaktbereich eingesteckt ist.

Auch aus der DE 10 2011 113 333 A1 ist eine elektrische Reihenklemme in Form einer Prüfklemme bekannt. Bei dieser Reihenklemme sind in dem Gehäuse ebenfalls zwei Leiteranschlusselementen und zwei Strombalken angeordnet. Die beiden Strombalken weisen jeweils neben einem Anschlussabschnitt und einem ersten Kontaktabschnitt zusätzlich noch einen zweiten Kontaktabschnitt auf. Die ersten Kontaktabschnitte sind voneinander beabstandet und nur bei eingestecktem Stecker über den Stecker elektrisch leitend miteinander verbunden sind, so dass diese Reihenklemme nach dem Schließer-Prinzip arbeitet. Außerdem sind in dem Gehäuse noch zwei weitere Strombalkenstücke angeordnet, wobei in mindestens einem der Strombalkenstücke eine Ausnehmung zum Einstecken eines Schenkels einer Steckbrücke ausgebildet ist. Jeweils einer der Strombalkenstücke ist dabei einem der Strombalken zugeordnet, so dass der zweite Kontaktabschnitt eines Strombalkens auf Grund der Federkraft des Strombalkens das zugeordnete Strombalkenstück kontaktiert, wenn kein Stecker eingesteckt ist.

Die Strombalken der Reihenklemme sind dann jeweils mit ihrem Anschlussabschnitt mit dem Leiteranschlusselement und mit ihrem zweiten Kontaktabschnitt mit dem jeweiligen Strombalkenstück elektrisch leitend verbunden. Wird ein Stecker eines Prüfsteckers in den Kontaktbereich eingesteckt, so werden die beiden Strombalken so ausgelenkt, dass der zweite Kontaktabschnitt eines Strombalkens beabstandet vom zugeordneten Strombalkenstück ist. Damit ist dann die elektrische Verbindung zwischen einem Leiteranschlusselement und dem zugeordneten Strombalkenstück unterbrochen.

Unabhängig davon, wie die Reihenklemmen im Einzelnen ausgebildet sind, ob es sich um Verbindungsklemmen oder Durchgangsklemmen mit Trennmöglichkeit handelt, werden derartige Reihenklemmen häufig zu mehreren nebeneinander angeordnet und mechanisch miteinander verbunden, so dass sie zusammen einen Reihenklemmenblock bilden. Diese werden dabei häufig in einer Wandöffnung einer Gehäusewand, beispielsweise einer Schaltschranktür oder einer Schaltschrankwand, befestigt.

Die WO 2011/054743 A2 offenbart eine Montageanordnung für elektrische Geräte, insbesondere für einen Schaltschrank, mit einer Montageplatte zur Aufnahme von elektrischen Geräten, insbesondere von Reihenklemmen. Die Montageplatte weist Öffnungen auf, in die die elektrischen Geräte eingesetzt werden können. Die elektrischen Geräte weisen Leiteranschlüsse zum Anschluss elektrischer Leiter auf, wobei die Leiteranschlüsse von einer ersten Seite der Montageplatte aus zugänglich sind, während die Gehäuse mit einem Frontabschnitt durch die Öffnung auf die andere Seite der Montageplatte vorstehen. Zur Fixierung der elektrischen Geräte in den Öffnungen in der Montageplatte weisen die Gehäuse der elektrischen Geräte als Rastmittel ausgebildete Befestigungsvorrichtungen auf, mit denen die Gehäuse in den Öffnungen der Montageplatte verrasten können. Die Befestigungsvorrichtungen werden jeweils von einem federnden Raststeg und einem Auflager bzw. Widerlager gebildet, die an den Seiten der Gehäuse angeordnet sind. Dabei sind die Raststege derart ausgelegt, dass sie beim Durchstecken der Reihenklemmen durch die Öffnungen ausweichen, woraufhin die Ränder der Öffnung im Zwischenraum zwischen dem Widerlager und den Raststegen zum Liegen kommen. Dadurch kann der Raststeg zurückfedern und die Montageplatte wird zwischen dem Raststeg und dem Widerlager arretiert, so dass die Reihenklemme in der Öffnung der Montageplatte befestigt ist.

Aus der DE 198 01 260 C2 ist eine Wand-Durchführungsklemme bekannt, bei der ein einteiliges Klemmengehäuse bis zu einem Anschlag durch die Wandöffnung gesteckt wird und anschließend auf das durch die Wandöffnung geführte Teil ein klammerförmiger Rasthebel aufgeschoben wird. Der Rasthebel verrastet mit zwei gegenüberliegenden Seiten des Gehäuses, so dass die Gehäusewand zwischen dem Anschlag auf der einen Seite und dem Rasthebel auf der anderen Seite fixiert wird. Hierbei muss zur Montage die Gehäusewand beidseitig zugänglich sein.

Auch die DE 202 00 974 U1 offenbart eine Wand-Durchführungsklemme, bei der das einteilige Klemmengehäuse durch die Wandöffnung eines Gehäuses gesteckt wird. Beim Durchstecken des Klemmengehäuses durch die Wandöffnung werden an der Oberseite und an der Unterseite des Gehäuses vorgesehene Federrasten durch die Oberkante bzw. die Unterkante der Wandöffnung zurückgedrängt. Zur endgültigen Fixierung der Durchführungsklemme in der Wandöffnung muss ein erneutes Rückfedern der Federrasten durch einen Blockierschieber verhindert werden, der nur von der Innenseite des Gehäuses bedient werden kann, während die Durchführungsklemme zunächst von der Außenseite der Wandöffnung eingeschoben werden muss, so dass auch hier ein Zugang zu beiden Seiten der Gehäusewand bei der Montage notwendig ist. Außerdem sind die beiden zuvor beschriebenen Wand-Durchführungsklemmen nicht dazu vorgesehen und auch nicht dazu geeignet, einen aus mehreren Reihenklemmen bestehenden Reihenklemmenblock in einer Wandöffnung einer Gehäusewand zu befestigen.

Aus der DE 10 2010 045 913 B4 ist ein Wanddurchführungs-Steckverbinder zur Durchführung und Verrastung in einem Wandausschnitt einer Gehäusewand bekannt. Der Wanddurchführungs-Steckverbinder weist ein Isolierstoffgehäuse mit zwei federnden Befestigungsarmen auf, die an einander gegenüberliegenden Seiten des Isolierstoffgehäuses angeordnet sind und jeweils eine Rastkante zur Verrastung einer Gehäusewand aufweisen. Die beiden federnden Befestigungsrastarme sind gegenüberliegend zu ihrem freien Ende mit zwei voneinander beabstandeten Federbögen an einem Trägerabschnitt angeformt, wobei zwischen den Federbögen ein Freiraum zur Aufnahme eines Halteabschnitts eines auf den Steckverbinder aufsteckbaren Gegensteckverbinders ausgebildet ist.

Die EP 1 655 813 A1 offenbart ein Befestigungselement für eine Wanddurchführungsklemme, die einen U-förmigen Grundkörper mit zwei Schenkeln aufweist, an deren freien Enden Fixierelemente ausgebildet sind. Außerdem weist das Befestigungselement noch einen schwenkbaren Betätigungskeil auf, der über einen flexiblen Verbindungssteg mit einem Schenkel des U-förmigen Befestigungselements verbunden ist. Zusätzlich ist ein federndes Klemmelement vorgesehen ist, das im montierten Zustand gegen eine Innenkante der Schmalseite der Wandöffnung wirkt.

Das Befestigungselement wird zusammen mit dem Klemmengehäuse der Wanddurchführungsklemme in eine Öffnung einer Gehäusewand eingesteckt und dort durch Verschwenken des Betätigungskeils klemmend befestigt. Wird der Betätigungskeil zwischen die beiden Schenkel des U-förmigen Befestigungselements verschwenkt, so werden sowohl die Schenkel des Befestigungselements gegen die Innenkanten der einander gegenüberliegenden Längsseiten der Wandöffnung gedrückt als auch das federnde Klemmelement gegen die **In**nenkante einer Schmalseite der Wandöffnung gepresst. Dadurch ist zwar ein einfaches Befestigen und Lösen der Wanddurchführungsklemme in der Wandöffnung möglich, der flexible Verbindungssteg ist jedoch anfällig gegenüber Torsion und kann bereits durch eine geringfügig falsche Führung eines Betätigungswerkzeuges beschädigt werden.

Die DE 10 2012 011 676 A1, von der die Erfindung ausgeht, offenbart eine Befestigungsklemme für einen aus mehreren Reihenklemmen bestehenden Reihenklemmenblock, die eine einseitige Montage und Demontage des Reihenklemmenblocks in einer Wandöffnung einer Gehäusewand ermöglicht. Hierzu ist im Klemmengehäuse der bekannten Befestigungsklemme ein Klemmelemente verschiebbar angeordnet, das eine Klemmenschräge aufweist, die durch eine Öffnung im Klemmengehäuse herausragt. Das Klemmelement ist mit Hilfe einer Schraube in eine Klemmposition verbringbar ist, in der die Klemmschräge in montiertem Zustand der Befestigungsklemme gegen die obere Innenkante der Wandöffnung drückt.

Die Montage und Demontage der Befestigungsklemme in der Wandöffnung erfolgt dabei nur von einer Seite, nämlich von der Seite, von der die Schraube zum Verschieben des Klemmelements betätigt werden kann. Von dieser Seite wird die Befestigungsklemme zunächst in die Wandöffnung eingeschoben, bevor die Befestigungsklemme durch Verbringen des Klemmelements in die Klemmposition in der Wandöffnung fixiert wird. Damit eine ausreichend sicher Befestigung der Klemme in der Wandöffnung erfolgt, darf die Klemmfläche zwischen der Klemmschräge und der oberen Innenkante der Wandöffnung nicht zu klein sein. Dies bedeutet, dass das Klemmelement eine gewisse Erstreckung senkrecht zur Erstreckungsrichtung des Klemmengehäuses aufweisen muss, d. h. das Klemmelement muss eine gewisse Mindestbreite haben. Dies führt dazu, dass auch das Klemmengehäuse, in dem das Klemmelement verschiebbar angeordnet ist, eine gewisse Mindestbreite aufweisen muss. Insbesondere bei einem Reihenklemmenblock, der aus mehreren relativ schmalen Reihenklemmen besteht, führt dies dazu, dass eine Befestigungsklemme breiter als die einzelnen Reihenklemmen ist. Damit ein Reihenklemmenblock mit einer bestimmten Anzahl an Reihenklemmen in einer Wandöffnung montiert werden kann, muss die Wandöffnung dann eine Breite aufweisen, die deutlich größer ist, als die Breite des reinen Reihenklemmenblocks.

Der vorliegenden Erfindung liegt daher die Aufgabe zu Grunde, eine Befestigungsmöglichkeit für einen aus mehreren Reihenklemmen bestehenden Reihenklemmenblock zur Verfügung zu stellen, die eine einfache Montage und Demontage des Reihenklemmenblocks in einer Wandöffnung einer Gehäusewand ermöglicht, wobei der dafür benötigte Bauraum möglichst gering sein soll, so dass ein Reihenklemmenblock auch in einer relativ schmalen Wandöffnung befestigt werden kann.

Diese Aufgabe ist bei der eingangs beschriebenen Befestigungsklemme mit den Merkmalen des Patentanspruchs 1 gelöst. Erfindungsgemäß ist das Klemmelement als federnder Rastarm ausgebildet, der mit seinem Fußbreich am Klemmengehäuse befestigt ist und an dessen freien Ende die Klemmfläche ausgebildet ist, wobei sich der Rastarm entlang der Seitenfläche des Klemmengehäuses erstreckt. Im montierten Zustand der Befestigungsklemme wirkt dann die Klemmfläche gegen eine Kante der Wandöffnung, bei der es sich insbesondere um die gegenüberliegende seitliche Innenkante der Wandöffnung handeln kann. Durch die Ausbildung des mindestens einen Klemmelements als federnder Rastarm, der sich näherungsweise parallel zur Seitenfläche des Klemmengehäuses erstreckt und dessen freies Ende als Klemmfläche ausgebildet ist, erfolgt die Klemmung nicht an der oberen oder unteren Innenkante der Wandöffnung, sondern an einer seitlichen Innenkante der Wandöffnung. Die Klemmfläche des Rastarms kann dadurch eine ausreichend große Breite aufweisen, ohne dass dies zu einer entsprechenden Breite des Klemmengehäuses führt. Die Breite des Klemmengehäuses ist vielmehr unabhängig von der Breite der Klemmfläche des Klemmelements, da sich der Rastarms im Wesentlichen senkrecht zur Querertreckung des Klemmengehäuses erstreckt.

Beim Durchstecken des Klemmengehäuses durch die Wandöffnung wird der an der Seitenfläche des Gehäuses befestigte Rastarm durch die Innenkante der Wandöffnung in Richtung der Seitenfläche des Klemmengehäuses zurückgedrängt, wodurch das Klemmengehäuse in der Wandöffnung festgeklemmt wird. Um ein unbefugtes Lösen der Verrastung zu verhindern, und die Durchführungsklemme in der Wandöffnung zu sichern, ist außerdem ein Sperrelement verschiebbar am Klemmengehäuse angeordnet, das aus einer ersten Position in eine zweite Position verbringbar ist. In seiner ersten Position ist das Sperrelements so angeordnet, dass der mindestens eine federnde Rastarme in Richtung der Seitenfläche des Klemmengehäuses auslenkbar ist, so dass das Klemmengehäuse in die Wandöffnung eingeschoben werden kann. In seiner zweiten Position ist das Sperrelement dagegen teilweise zwischen dem freien Ende des federnden Rastarms und der Seitenfläche des Klemmengehäuses angeordnet, so dass der federnde Rastarme nicht in Richtung der Seitenfläche des Klemmengehäuses ausgelenkt werden kann. Das Klemmengehäuses ist dann sicher in der Wandöffnung fixiert, da die Klemmung zwischen der Klemmfläche des mindestens einen Rastarms und der seitlichen Innenkante der Wandöffnung nicht gelöst werden kann, ohne dass das Sperrelement wieder in seine erste Position verbracht wird.

Das Sperrelement ist dabei vorzugsweise so angeordnet, dass es von der Seite aus betätigbar ist, von der die Befestigungsklemme in die Wandöffnung eingeführt wird. Die Montage und Demontage der Befestigungsklemme in der Wandöffnung erfolgt dann nur von einer Seite, insbesondere von der Verdrahtungsseite. Von dieser Seite wird die Befestigungsklemme zunächst in die Wandöffnung eingeführt, bevor die Befestigungsklemme durch Betätigen des Sperrelements in der Wandöffnung sicher fixiert und gegen unbefugtes Lösen gesichert wird.

Gemäß einer vorteilhaften Ausgestaltung weist die Klemmfläche am freien Ende des federnden Rastarms mehrere Rippen auf, die zur Verrastung der Befestigungsklemme in der Wandöffnung dienen. Da die Rastarme federnd ausgebildet sind, können darüber hinaus gewisse Toleranzen bei der Breite der Wandöffnung ausgeglichen werden.

Wie zuvor ausgeführt worden ist, befindet sich das Sperrelement in seiner zweiten Position zumindest teilweise zwischen dem freien Ende des federnden Rastarms und der Seitenfläche des Klemmengehäuses, so dass der federnde Rastarm nicht in Richtung der Seitenfläche des Klemmengehäuses ausgelenkt werden kann. Dabei weist das Sperrelement auf seiner dem freien Ende des federnden Rastarms zugewandten Seite eine Schräge auf. Dadurch kann das Sperrelement mit seiner Schräge besonders einfach zwischen das freie Ende des federnden Rastarms und der Seitenfläche des Klemmengehäuses eingeschoben werden, wenn das Sperrelement aus seiner ersten Position in seine zweite Position verbracht wird. Je weiter das Sperrelement in seine zweite Position verbracht wird, desto weiter gelangt das Sperrelement mit der Schräge zwischen das freie Ende des Rastarms und der Seitenfläche des Klemmengehäuses. Somit kann durch das Sperrelement nicht nur ein Zurückfedern des Rastarms in Richtung der Seitenfläche des Klemmengehäuses verhindert werden, sondern darüber hinaus auch die Kraft, mit der der Rastarm mit seiner Klemmfläche gegen die seitliche Innenkante der Wandöffnung wirkt, erhöht werden.

Vorzugsweise weist dabei die Schräge am Sperrelement eine Verzahnung und das freie Ende des federnden Rastarms auf der der Schräge zugewandten Seiten eine korrespondierende Gegenverzahnung auf. Dadurch wird ein ungewolltes Zurückgleiten des Sperrelements aus seiner zweiten Position in seine erste Position sicher verhindert, insbesondere auch dann, wenn auf die Befestigungsklemme dynamische Belastungen, wie beispielsweise Erschütterungen oder Vibrationen, einwirken.

Gemäß einer weiteren vorteilhaften Ausgestaltung der erfindungsgemäßen Befestigungsklemme ist im Klemmengehäuse eine Einlegeschräge ausgebildet, mit der das Klemmengehäuse im montierten Zustand der Befestigungsklemme auf der unteren Innenkante der Wandöffnung aufsitzt. Die Befestigungsklemme wird dadurch im montierten Zustand in vertikaler Richtung zusätzlich fixiert und gehalten. Darüber hinaus dient die Ausbildung der Einlegeschräge an der Unterseite des Klemmengehäuses auch zur Vereinfachung der Montage der Befestigungsklemme in der Wandöffnung. Hierzu wird die Befestigungsklemme zunächst mit der Einlegeschräge auf die untere Innenkante der Wandöffnung aufgesetzt und dann in die Wandöffnung eingeschwenkt, wobei der federnde Rastarm durch die Innenkante der Wandöffnung in Richtung der Seitenfläche des Klemmengehäuses zurückgedrängt wird und dann die Klemmfläche mit der Innenkante der Wandöffnung verrastet.

Um das Einführen der Befestigungsklemme in die Wandöffnung weiter zu vereinfachen und eine richtige Position der Befestigungsklemme in der Wandöffnung zu gewährleisten, ist am Klemmengehäuse vorzugsweise eine Anlagefläche ausgebildet. Die Anlagefläche erstreckt sich dabei vorzugsweise senkrecht oder näherungsweise senkrecht zur Seitenfläche des Klemmengehäuses. Im montierten Zustand der Befestigungsklemme liegt diese dann mit der Anlagefläche an der Gehäusewand an. Die Ausbildung der Anlagefläche sorgt somit auch dafür, dass die Befestigungsklemme bei der Montage stets ausreichend weit in die Wandöffnung eingeführt wird.

Eingangs ist ausgeführt worden, dass die Befestigungsklemme mindestens ein Klemmelement aufweist, das als federnder Rastarm ausgebildet ist. Gemäß der bevorzugten Ausgestaltung der Befestigungsklemme weist diese zwei federnde Rastarme auf, die jeweils mit ihrem Fußbereich am Klemmengehäuse befestigt sind und sich beide entlang der Seitenfläche des Klemmengehäuses erstrecken. Die beiden Rastarme sind dabei senkrecht zur Erstreckungsrichtung der Befestigungsklemme nebeneinander, d. h. bei waagerechter Anordnung der Befestigungsklemme übereinander angeordnet. Hierdurch wird eine besonders sichere Fixierung der Befestigungsklemme in einer Wandöffnung ermöglicht, da ein Verkippen der Befestigungsklemme um deren Längsachse verhindert wird. Darüber hinaus kann durch die Ausbildung von zwei federnden Rastarmen mit dann zwei Klemmflächen auch eine sichere Befestigung der Klemme in der Wandöffnung erfolgen, ohne dass die Breite eines Rastarms zu groß gewählt werden muss, was sich negativ auf dessen federnde Eigenschaft auswirken könnte. Damit die beiden federnden Rastarme insbesondere beim Einschwenken der Befestigungsklemme in die Wandöffnung unabhängig voneinander ausgelenkt werden können, sind die beiden Rastarme mit einem Abstand zueinander am Klemmengehäuse angeordnet.

Zuvor ist auch ausgeführt worden, dass das Sperrelement vorzugsweise so angeordnet ist, dass es von der Seite aus betätigbar ist, von der auch die Befestigungsklemme in die Wandöffnung eingeführt wird. Damit das Sperrelement vom Monteur einfach aus seiner ersten Position in seine zweite Position bzw. aus seiner zweiten Position in seine erste Position verbracht werden kann, ist gemäß einer weiteren vorteilhaften Ausgestaltung ein Betätigungselement vorgesehen, das einerseits mit dem Sperrelement verbunden und andererseits für einen Monteur einfach zugänglich ist.

Gemäß einer ersten vorteilhaften Ausgestaltung ist als Betätigungselement eine Schraube in einer von außen zugänglichen Bohrung im Klemmengehäuse angeordnet und im Sperrelement ein Gewinde ausgebildet, in dass das Ende der Schraube eingeschraubt ist. Die Bohrung ist dabei derart ausgebildet, dass die Schraube in Längsrichtung fixiert ist, so dass ein Verdrehen der Schraube ein Verschieben des Sperrelements bewirkt. Hierzu kann das Ende der Schraube in einer Mutter eingeschraubt sein, die verdrehsicher im Sperrelement angeordnet ist.

Gemäß einer anderen Variante der Erfindung ist als Betätigungselement eine federgespannte Verriegelungseinheit vorgesehen. Die Verriegelungseinheit umfasst eine Druckfeder und ein Verriegelungselement, wobei das Verriegelungselement einen Verriegelungsabschnitt und einen Griff- oder Betätigungsabschnitt aufweist. Der Verriegelungsabschnitt ist teilweise in einer Bohrung im Klemmengehäuse angeordnet. Die Druckfeder ist mit ihrem einen Ende am Verriegelungsabschnitt und mit ihrem anderen Ende an dem Sperrelement angeordnet. Das Verriegelungselement ist von einer ersten Position in Erstreckungsrichtung der Befestigungsklemme in eine zweite Position verbringbar, wobei das Verriegelungselement in der zweiten Position eine Kraft auf die Druckfeder ausübt, so dass die Druckfeder gespannt ist und das Sperrelement in seine zweite Position verbringt. Das Verriegelungselement ist in seiner zweiten Position durch Drehung des Verriegelungselements um seine Längsachse, die parallel zur Erstreckungsrichtung der Befestigungsklemme verläuft, arretierbar.

Auf diese Weise kann das Betätigungselement von der ersten Position von außen mit Hilfe des Griffabschnitts ins Innere des Klemmengehäuses gedrückt werden. Anstelle eines Griffabschnitts, der von Hand betätigt werden kann, kann das Verriegelungselement auch einen Betätigungsabschnitt aufweisen, der mit Hilfe eines Werkzeugs, beispielsweise eines Schraubendrehers, verdreht werden kann. Durch eine Drehung des Griff- oder Betätigungsabschnitts, beispielsweise um eine viertel oder halbe Umdrehung, wird das Verriegelungselement dann in der zweiten Position arretiert und das Sperrelement verbleibt ebenfalls in der zweiten Position.

Bei einer weiteren Ausgestaltung der Variante der Erfindung ist am Verriegelungsabschnitt ein Rasthaken vorgesehen. In der Bohrung ist mindestens eine zum Rasthaken korrespondierende Nut vorgesehen, wobei der Rasthaken in der ersten Position des Verriegelungselements mit der Nut im Eingriff ist und in der zweiten Position des Verriegelungselements aus der Bohrung und der Nut in Richtung des Inneren des Klemmengehäuses herausgetreten ist. Der Rasthaken ist durch Drehung des Verriegelungselements um seine Längsachse an einem Vorsprung im Klemmengehäuse anlegbar. Das Verriegelungselement kann somit ähnlich einem Schlüssel in das Innere des Klemmengehäuses geschoben werden. Während der Rasthaken mit der Nut im Eingriff ist, kann das Verriegelungselement nicht um seine Längsachse gedreht werden. Sobald der Rasthaken aus der Nut heraustritt, ist das Verriegelungselement um seine Längsachse drehbar. Als Vorsprung kann dabei beispielsweise die Bewandung der Bohrung im Klemmengehäuse dienen, an die sich der Rasthaken anlegt. In der zweiten Position ist die Feder gespannt, so dass der Rasthaken automatisch gegen die Bewandung gedrückt wird. Denkbar ist aber auch ein speziell ausgestalteter Vorsprung, der beispielsweise aufgrund eines für den Rasthaken ausgestalteten Profils nur eine eingeschränkte Drehung des Verriegelungselements erlaubt.

Bei den beiden zuvor beschriebenen Varianten der Erfindung erfolgt ein Verschieben des Sperrelements aus seiner ersten Position in seine zweite Position, dadurch, dass ein Monteur eine Drehbewegung an einer Schraube oder an dem Verriegelungselement ausführt. Gemäß einer weiteren alternativen Ausgestaltung der Erfindung ist als Betätigungselement ein Hebelsystem mit zwei Hebeln vorgesehen, wobei der erste Hebel mit seinem ersten Ende gelenkig mit dem Sperrelement und mit seinem zweiten Ende gelenkig mit dem ersten Ende des zweiten Hebels verbunden ist, der drehbar am Klemmengehäuse gelagert ist. Das zweite Ende des zweiten Hebels ist von außerhalb des Gehäuses zugänglich, so dass der zweite Hebel von einem Monteur einfach aus seiner ersten Position in seine zweite Position verschwenkt werden kann. Durch die Verbindung des zweiten Hebels über den ersten Hebel mit dem Sperrelement führt ein Verschwenken des zweiten Hebels aus seiner ersten Position in seine zweite Position dazu, dass das Sperrelement aus seiner ersten Position in seine zweite Position verbracht wird.

Gemäß einer besonders einfachen Variante der Erfindung ist als Betätigungselement ein Betätigungsabschnitt vorgesehen, der mit dem Sperrelement verbunden ist. Der Betätigungsabschnitt ist dabei so angeordnet und ausgebildet, dass das vom Sperrelement weg weisende, freie Ende des Betätigungsabschitts von außerhalb des Klemmengehäuses zugänglich ist, so dass das Sperrelement über den Betätigungsabschnitt aus seiner ersten Position in seine zweite Position und aus seiner zweiten Position in seine erste Position verschiebbar ist. Der Betätigungsabschnitt kann dabei von Hand betätigt werden kann, so dass er auch als Griffabschnitt bezeichnet werden kann. Alternativ dazu kann der Betätigungsabschnitt auch so ausgebildet sein, dass er mit Hilfe eines Werkzeugs, beispielsweise eines Schraubendrehers, betätigt wird. Das Sperrelement und der Betätigungsabschnitt können entweder zwei separate Bauteile sein, die miteinader verbunden sind, oder der Betätigungsabschnitt ist einstückig mit dem Sperrelement verbunden. Entscheidend ist lediglich, dass eine Verschiebung des Betätigungsabschnitts auch zu einer entsprechenden Verschiebung des Sperrelements führt.

Gemäß einer bevorzugten Ausgestaltung dieser Variante ist ein federnder Rastarm vorgesehen, der sich mit seinem einen Ende am Klemmengehäuse abstützt und mit seinem zweiten, freien Ende mit einem Gegenrastelement zusammenwirkt, das am Sperrelement oder am Betätigungsabschnitt ausgebildet ist. Dadurch kann das Sperrelement sicher in seiner zweiten Position gehalten werden, wenn das freie Ende des Rastarms und das Gegenrastelement miteinander in Eingriff sind. Der Rastarm dient so als eine Art Rücklaufsperre, die verhindert, dass sich das Sperrelement ungewollt, beispielsweise aufgrund von Vibrationen oder Erschütterungen, aus seiner zweiten Position in seine erste Position verschiebt, wodurch die Fixierung des Klemmengehäuses in der Wandöffnung nicht mehr sicher gewährleistet wäre.

Der Rastarm kann als separates Bauteil oder einstückig mit dem Klemmengehäuse ausgebildet sein. Der Rastarm kann beipielsweise auch durch einen Schenkel einer Schenkelfeder gebildet werden, die insgesamt im Klemmengehäuse festgelegt ist, so dass nur der als Rastarm fungierende Schenkel ausgelenkt werden kann, nicht aber die gesamte Schenkelfeder im Klemmengehäuse verschiebbar ist.

Das Gegenrastelement, mit dem das freie Ende des Rastarms zusammenwirken kann, ist vorzugweise als Verzahnung ausgebildet ist, die an einer Längskante des Sperrelements oder des Betätigungsabschnitts angeordnet ist. Hierzu ist dann am zweiten, freien Ende des Rastarms eine korrspondierende Gegenverzahnung ausgebildet. Weist die Verzahnung am Sperrelement bzw. am Betätigungsabschnitt eine gewisse Längserstreckung auf, so kann das Sperrelement stufenweise in verschiedenen Positionen fixiert werden, je nachdem wie weit das freie Ende des Sperrelements zwischen den federnden Rastarm und die Seitenfläche de Klemmengehäuse eingeschoben ist. Vorzugsweise sind die Verzahung und die Gegenverzahnung dabei so zueinander ausgerichtet, dass das Sperrelement aus seiner ersten Position in seine zweite Position verbringbar ist, auch wenn die Verzahung und die Gegenverzahnung miteinander in Eingriff sind, während das Sperrelement nur dann aus seiner zweiten Position in seine erste Position verbringbar ist, wenn die Verzahung und die Gegenverzahnung nicht miteinander in Eingriff sind. Dadurch kann das Sperrelement einfach in seine zweite Position verschoben werden, ohne dass der Rastarm ausgelenkt werden muss, um das freie Ende des Rastarms von der Verzahung am Sperrelement bzw. am am Betätigungsabschnitt abzuheben.

Mit den zuvor beschriebenen Varianten und Ausgestaltungen eines Betätigungselements wird jeweils die Möglichkeit geschaffen, dass ein Monteur das Verriegelungselement präzise und dennoch einfach und mit geringem Kraftaufwand aus seiner ersten Position in seine zweite Position bzw. aus seiner zweiten Position wieder in seine erste Position verbringen kann.

Im Unterschied zu den aus dem Stand der Technik bekannten, eingangs beschriebenen Wand-Durchführungsklemmen, erfolgt die Fixierung des Reihenklemmenblocks in der Wandöffnung nicht, jedenfalls nicht primär, über an den einzelnen Reihenklemmen ausgebildete Rastelemente, sondern über die Befestigungsklemmen, die üblicherweise auf beiden Seiten des Reihenklemmenblocks angeordnet sind. Dies hat den Vorteil, dass die Reihenklemmen im geblockten Zustand einfacher in der Wandöffnung befestigt werden können, als dies bei einem Reihenklemmenblock der Fall ist, der sich aus mehreren Reihenklemmen zusammensetzt, die jeweils ein Rastelement zur Fixierung in der Wandöffnung aufweisen.

Die Erfindung betrifft daher auch eine Baueinheit bestehend aus zwei erfindungsgemäßen Befestigungsklemmen und mehreren nebeneinander angeordneten Reihenklemmen, wobei die Reihenklemmen zwischen den Befestigungsklemmen angeordnet sind und jeweils ein Klemmengehäuse mit mindestens zwei darin angeordneten Leiteranschlusselementen aufweisen. Derartige Reihenklemmen sind in verschiedensten Ausführungsvarianten grundsätzlich bereits aus dem Stand der Technik bekannt. Vorzugsweise handelt es sich bei den Reihenklemmen um Durchgangsklemmen mit Trennmöglichkeit, so dass in die einzelnen Reihenklemmen jeweils ein Prüfstecker eingesteckt werden kann.

Die Reihenklemmen, die bei der bevorzugten Ausführungsform der Erfindung bei der Baueinheit verwendet werden, weisen jeweils mindestens zwei im Klemmengehäuse angeordnete Strombalken auf, die jeweils einen Anschlussabschnitt und einen Kontaktabschnitt aufweisen, wobei die Anschlussabschnitte jeweils einem Leiteranschlusselement zugeordnet sind, während die Kontaktabschnitte zusammen einen federnden Kontaktbereich zur Aufnahme des Steckers eines Prüf- oder Betriebssteckers bilden. Damit ein solcher Stecker in den federnden Kontaktbereich eingesteckt werden kann, ist in den Klemmengehäusen der Reihenklemme jeweils eine Öffnung ausgebildet, die von einer Seite, der Bedienerseite, aus zugänglich ist. Derartige Reihenklemme sind beispielsweise aus der DE 10 2011 113 333 B4 und der DE 10 2015 114 186 A1 bekannt.

Die elektrischen Reihenklemmen, die zusammen den Reihenklemmenblock bilden, sind jeweils scheibenförmig ausgebildet. Damit mehrere Reihenklemmen zusammen einen Reihenklemmenblock bilden, sind die einzelnen Reihenklemmen miteinander verbunden, wozu die Reihenklemmen über im Klemmengehäuse ausgebildete, korrespondierende Rastelemente miteinander verrastet sind. Die Rastelemente bestehen dabei vorzugsweise aus auf der einen Seite der Klemmengehäuse angeordneten Rastzapfen und auf der anderen Seite der Klemmengehäuse ausgebildeten korrespondierenden Rastausnehmungen. Um die Befestigungsklemmen mit den benachbarten Reihenklemmen zu verbinden, sind vorzugsweise auch an den Klemmengehäusen der Befestigungsklemmen Rastelemente ausgebildet, die zu den Rastausnehmungen und/oder Rastzapfen im Klemmengehäuse der Reihenklemmen korrespondieren.

Im Einzelnen gibt es nun eine Vielzahl von Möglichkeiten, die erfindungsgemäße Befestigungsklemme und die Baueinheit auszugestalten und weiterzubilden. Dazu wird verwiesen sowohl auf die nachgeordneten Patentansprüche, als auch auf die nachfolgende Beschreibung bevorzugter Ausführungsbeispiele in Verbindung mit der Zeichnung. In der Zeichnung zeigen
- Fig. 1: eine erfindungsgemäße Baueinheit, bestehend aus einem Reihenklemmenblock und zwei Befestigungsklemmen, schräg von der Bedienerseite,
- Fig. 2: die Baueinheit gemäß Fig. 1, eingesetzt in einer Wandöffnung,
- Fig. 3: eine erfindungsgemäße Befestigungsklemme beim Einsetzen in eine Wandöffnung, von der Seite,
- Fig. 4: die Befestigungsklemme gemäß Fig. 3, eingesetzt in die Wandöffnung,
- Fig. 5: die Befestigungsklemme gemäß Fig. 4, mit einem Schraubendreher zum Verschieben des Sperrelements aus seiner ersten Position in seine zweite Position,
- Fig. 6: eine Variante der Befestigungsklemme gemäß Fig. 5. mit einer federvorgespannten Verriegelungseinheit zum Verschieben des Sperrelements aus seiner ersten Position in seine zweite Position,
- Fig. 7: eine weitere Variante der Befestigungsklemme gemäß Fig. 5. mit einem Hebelsystem zum Verschieben des Sperrelements aus seiner ersten Position in seine zweite Position,
- Fig. 8: eine dritte Variante der Befestigungsklemme mit einem von Hand betätigbaren Betätigungsabschnitt zum Verschieben des Sperrelements, verrastet in seiner zweiten Position,
- Fig. 9: die Befestigungsklemme gemäß Fig. 8 mit gelöster Verrastung, und
- Fig. 10: die Befestigungsklemme gemäß Fig. 8 mit dem Sperrelement in seiner ersten Position.

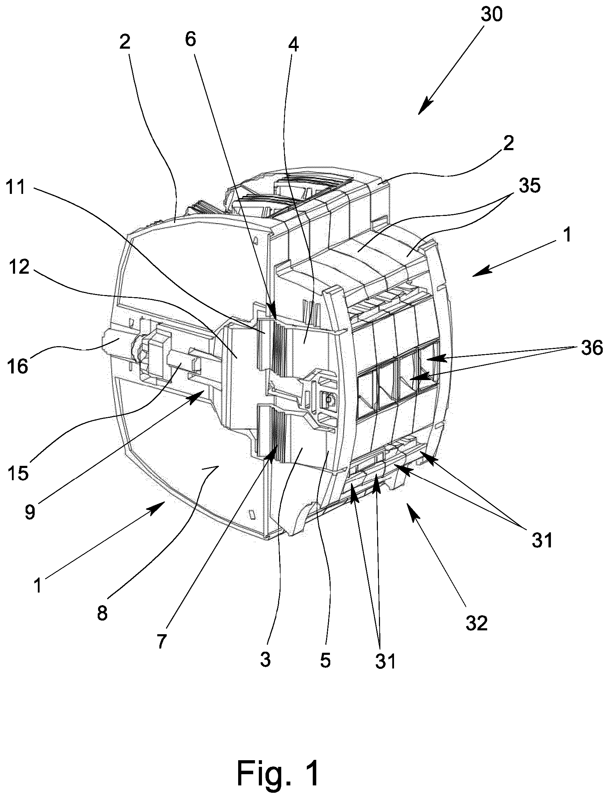

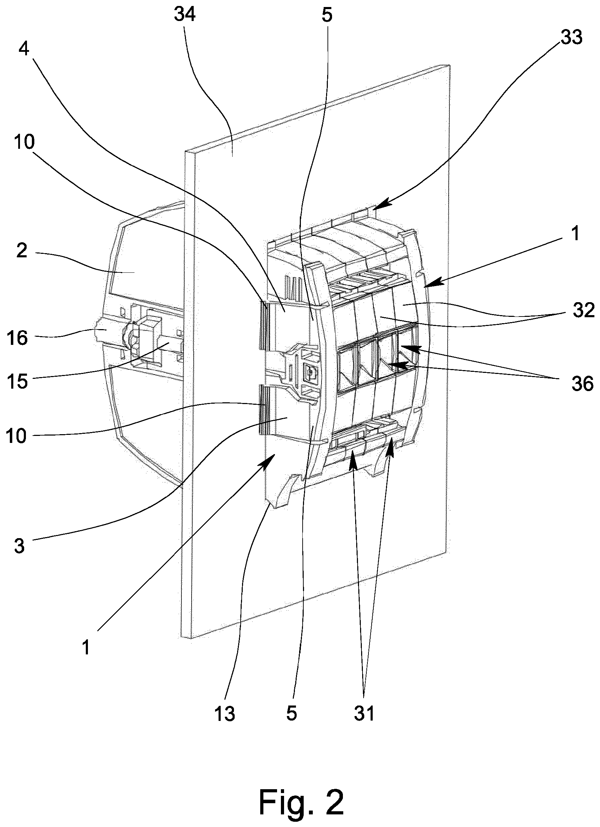

Die Figuren zeigen verschiedene Ausführungsvarianten der erfindungsgemäßen Befestigungsklemme 1 sowie in den Fig. 1 und 2 eine Baueinheit 30 bestehend aus zwei Befestigungsklemmen 1 und mehreren, vorliegend vier nebeneinander angeordneten Reihenklemmen 31, die zusammen einen Reihenklemmenblock 32 bilden. Die Befestigungsklemmen 1 dienen zur Fixierung des Reihenklemmenblocks 32 in einer Wandöffnung 33 einer Gehäusewand 34, bei der es sich beispielsweise um die Tür eines Schaltschranks handeln kann.

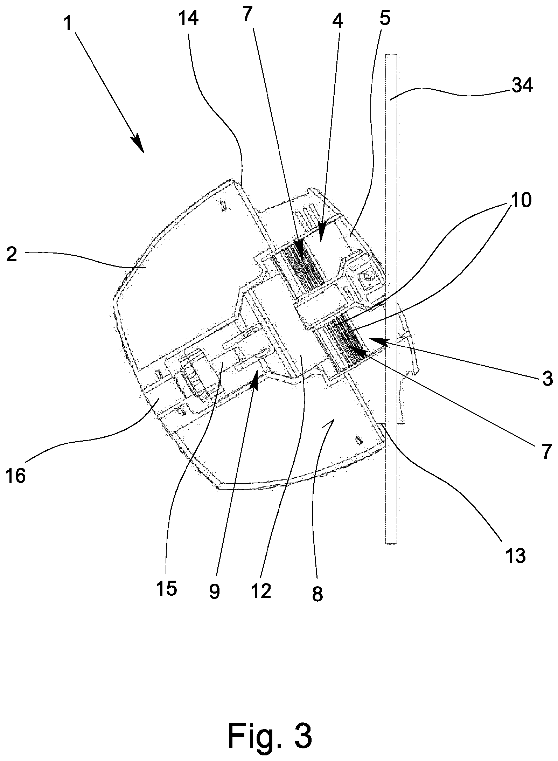

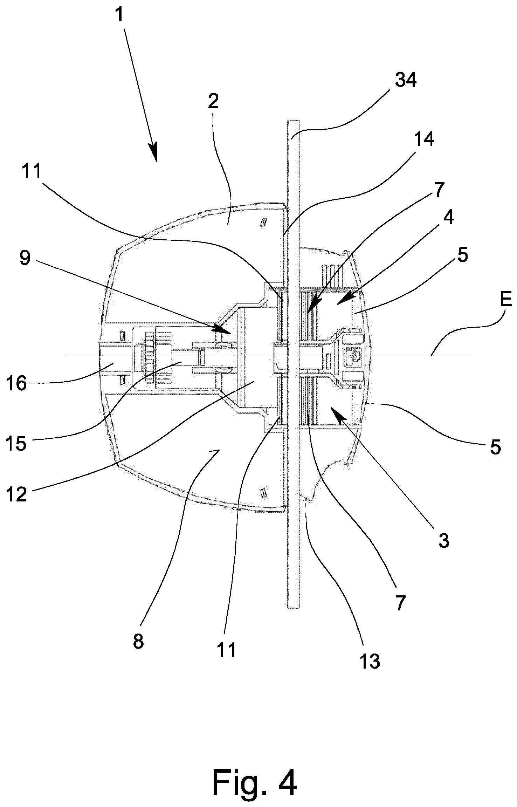

Die beispielsweise in den Fig. 3 und 4 von der Seite dargestellte Befestigungsklemme 1 weist ein Klemmengehäuse 2 auf, an dem zwei federnde Rastarme 3, 4 als Klemmelemente ausgebildet sind. Dabei ist der Fußbereich 5 der Rastarme 3, 4 am Klemmengehäuse 2 befestigt, während das freie Ende 6 der Rastarme 3, 4 als Klemmfläche 7 ausgebildet ist. Wie insbesondere aus der perspektivischen Darstellung gemäß Fig. 1 ersichtlich ist, erstrecken sich die Rastarme 3, 4 entlang der Seitenfläche 8 des Klemmengehäuses 2, so dass die Klemmfläche 7 in montiertem Zustand der Befestigungsklemme (Fig. 2) gegen eine seitliche Innenkante der Wandöffnung 33 wirkt. Die beiden Rastarme sind dabei senkrecht zur Erstreckungsrichtung E der Befestigungsklemme 1 nebeneinander angeordnet, in der Orientierung der Befestigungsklemme 1 gemäß Fig. 1 somit übereinander angeordnet.

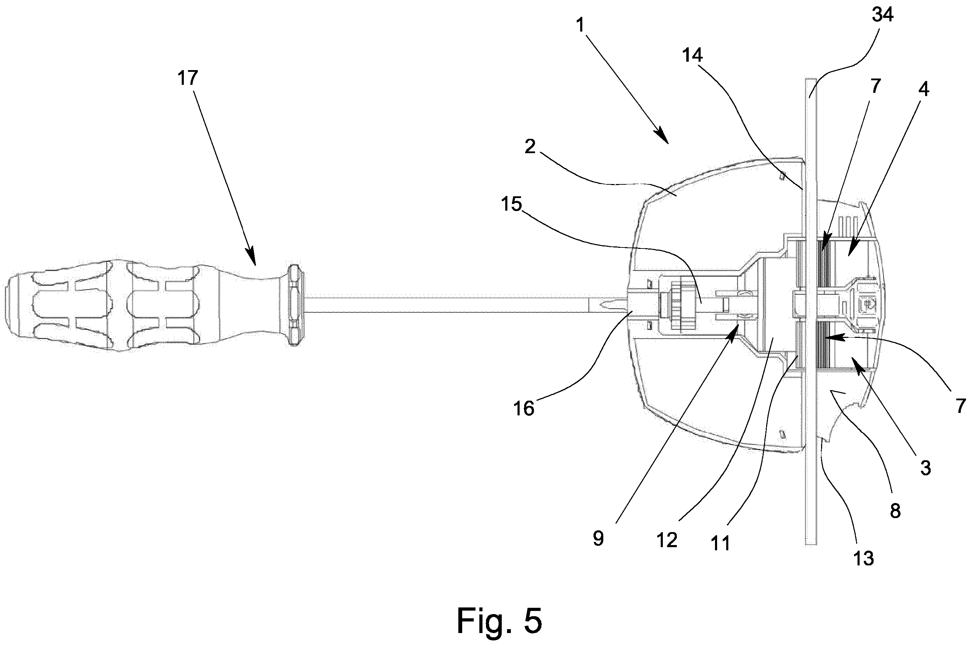

Zur Sicherung der Befestigungsklemme 1 in der Wandöffnung 33 ist am Klemmengehäuse 2 ein Sperrelement 9 verschiebbar angeordnet, das aus einer ersten Position (Fig. 5a, 6a, 7a, 10) in eine zweite Position (Fig. 5b, 6b, 7b, 8, 9) verbracht werden kann. In der ersten Position des Sperrelements 9 können die federnden Rastarme 3, 4 in Richtung der Seitenfläche 8 des Klemmengehäuses 2 ausgelenkt werden, so dass die Rastarme 3, 4 beim Durchstecken des Klemmengehäuses 2 durch die Wandöffnung 33 durch die Innenkante der Wandöffnung 33 nach innen ausgelenkt werden. Ist die Befestigungsklemme 1 gemäß Fig. 4 in der Wandöffnung 33 eingesetzt, so ist die Befestigungsklemme 1 dadurch in der Wandöffnung 33 fixiert, dass die federnden Rastarme 3, 4 jeweils mit ihrer Klemmfläche 7 gegen die seitliche Innenkante der Wandöffnung 33 drücken. An den Klemmflächen 7 ausgebildete Rippen 10 sorgen dabei dafür, dass das Klemmengehäuse 2 in seiner Position in der Wandöffnung 33 verrastet. Die Position des Klemmengehäuses 2 in der Wandöffnung 33 wird dadurch zusätzlich gesichert, dass das äußere Ende 11 der Rastarme 3, 4 nach außen abgebogen ist. Das äußere Ende 11 ist dabei auf der einen Seite der Gehäusewand 34, der Verdrahtungsseite, und der Rest der federnden Rastarme 3, 4 auf der anderen Seite der Gehäusewand 34, der Bedienerseite, angeordnet.

Um ein unbefugtes Lösen der Verrastung zwischen den Klemmflächen 7 der Rastarme 3, 4 und der seitlichen Innenkante der Wandöffnung 33 zu verhindern, muss das Sperrelement 9 in seine zweite Position verbracht werden. Das Sperrelement 9 weist dazu auf der dem freien Ende 6 der federnden Rastarme 3, 4 zugewandten Seite eine Schräge 12 auf, die in der zweiten Position des Sperrelements 9 zwischen dem freien Ende 6 der Rastelemente 3, 4 und der Seitenfläche 8 des Klemmengehäuses 2 angeordnet ist. Dadurch werden die Rastarme 3, 4 in ihrer klemmenden Position blockiert, so dass sie nicht in Richtung der Seitenfläche 8 des Klemmengehäuses 2 ausgelenkt werden können.

Anhand der Fig. 3 und 4 ist erkennbar, wie die Befestigungsklemme 1 bzw. die Baueinheit 30 in die Wandöffnung 33 an der Gehäusewand 34 eingesetzt wird. An der Unterseite des Klemmengehäuses 2 ist eine Einlegeschräge 13 ausgebildet, mit der das Klemmengehäuse 2 zunächst auf die untere Innenkante der Wandöffnung 33 aufgesetzt wird. Anschließend wird die Befestigungsklemme 1 bzw. die Baueinheit 30 - bei der Darstellung gemäß Fig. 3 - im Uhrzeigersinn in die Wandöffnung 33 eingeschwenkt, wobei - wie zuvor bereits ausgeführt - die Rastarme 3, 4 durch die seitliche Innenkante der Wandöffnung 33 in Richtung der Seitenfläche 8 des Klemmengehäuses 2 ausgelenkt werden. Die am Klemmengehäuse 2 ausgebildete Anlagefläche 14, die sich senkrecht zur Seitenfläche 8 des Klemmengehäuses 2 erstreckt, dient dabei als Anschlag beim Einschwenken der Befestigungsklemme 1 in die Wandöffnung 33, so dass die Befestigungsklemme 1 stets so weit in die Wandöffnung 33 eingeführt wird, bis die Anlagefläche 14 an der parallel dazu verlaufenden Gehäusewand 34 anliegt.

Die Fig. 5 bis 8 zeigen verschiedene Ausführungsvarianten der erfindungsgemäßen Befestigungsklemme 1, die sich im Wesentlichen nur dadurch voneinander unterscheiden, wie das Sperrelement 9 aus seiner ersten Position in seine zweite Position verbracht werden kann. Allen Ausführungsbeispielen ist dabei gemeinsam, dass die Befestigungsklemme 1 zunächst von der einen Seite, der Verdrahtungsseite, in die Wandöffnung 33 eingeschwenkt wird, wie dies in den Fig. 3 und 4 dargestellt ist. Anschließend wird das Sperrelement 9 mit Hilfe eines Betätigungselements aus seiner ersten Position in seine zweite Position verbracht, wobei das Betätigungselement ebenfalls von der Verdrahtungsseite aus zugänglich ist. Dadurch ist sichergestellt, dass die Verrastung zwischen den Rastarmen 3, 4 und der seitlichen Innenkante der Wandöffnung 33 nicht von der zweiten Seite, der Bedienerseite, gelöst und dann die Befestigungsklemme 1 bzw. die Baueinheit 30 aus der Wandöffnung 33 herausgeschoben werden kann.

Bei der ersten Ausführungsvariante gemäß Fig. 5 ist als Betätigungselement eine Schraube 15 vorgesehen, die in einer von außen zugänglichen Bohrung 16 im Klemmengehäuse 2 angeordnet ist. Die Schraube 15 ist dabei mit ihrem Ende derart mit dem Sperrelement 9 verbunden, dass ein Verdrehen der Schraube 15 ein axiales Verschieben des Sperrelements 9 bewirkt. Hierzu kann im Sperrelement 9 eine zur Schraube 15 korrespondierende Mutter verdrehsicher angeordnet sein, in die das Ende der Schraube 15 eingeschraubt ist. Außerdem weist die Bohrung 16 eine Anlageschulter für die Schraube 15 auf, an der der Schraubenkopf anliegt, wodurch die Schraube 15 in Längsrichtung fixiert ist. Ein Verdrehen der Schraube 15 mittels eines Schraubendrehers 17 führt so nicht zu einer Längsverschiebung der Schraube 15, sondern zu einer Verschiebung des Sperrelements 9 in Längsrichtung der Schraube 15. Dadurch kann das Sperrelement 9 mit seiner Schräge 12 zwischen das freie Ende 7 der Rastarme 3, 4 und die Seitenfläche 8 des Klemmengehäuses 2 verschoben werden, wodurch die Rastarme 3, 4 in ihrer Position blockiert werden, in der die Klemmflächen 7 der Rastarme 3, 4 gegen die seitliche Innenkante der Wandöffnung 33 klemmen. Soll die Befestigungsklemme 1 wieder aus der Wandöffnung 33 herausgenommen werden, so muss dazu die Schraube 15 mit Hilfe des Schraubendrehers 17 in die entgegengesetzte Richtung gedreht werden, wodurch das Sperrelement 9 aus seiner zweiten Position in seine erste Position zurückgezogen wird. Danach können dann die Rastarme 3, 4 in Richtung der Seitenfläche 8 des Klemmengehäuses 2 ausgelenkt werden, so dass die Befestigungsklemme 1 in Richtung der Verdrahtungsseite durch die Wandöffnung 33 durchgesteckt werden kann.

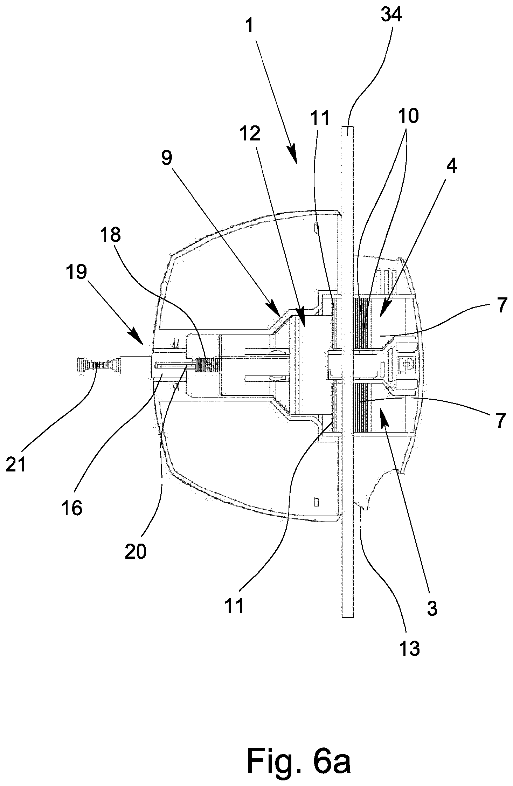

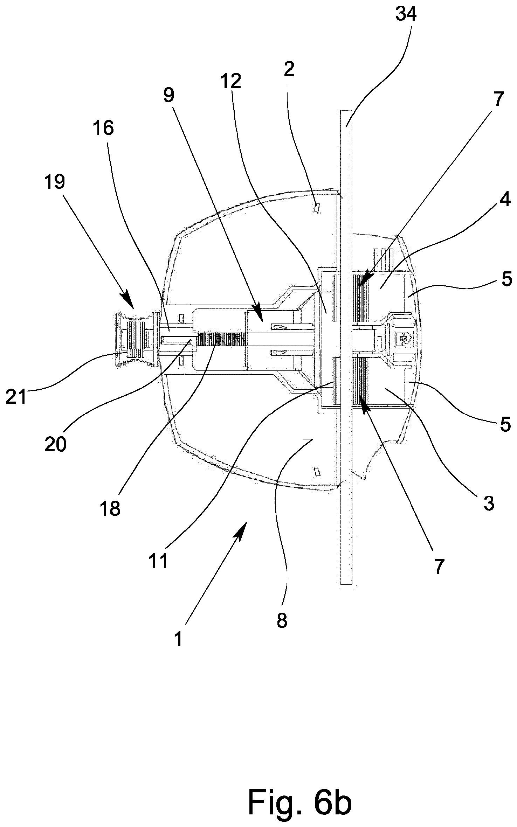

Bei der Ausführungsvariante gemäß Fig. 6 ist als Betätigungselement eine federgespannte Verriegelungseinheit vorgesehen. Die Verriegelungseinheit umfasst eine Druckfeder 18 und ein Verriegelungselement 19, wobei das Verriegelungselement einen Verriegelungsabschnitt 20 und einen Griffabschnitt 21 aufweist. Der Verriegelungsabschnitt 20 ist in der Bohrung 16 im Klemmengehäuse 2 angeordnet. Die Druckfeder 18 ist wiederum mit ihrem einen Ende am Verriegelungsabschnitt 20 und mit ihrem anderen Ende an dem Sperrelement 9 angeordnet. Ein Monteur kann mit Hilfe des Griffabschnitts 21 das Verriegelungselement 19 von einer ersten Position in Erstreckungsrichtung E der Befestigungsklemme 1 in eine zweite Position in das Klemmengehäuse 2 hineindrücken. Dabei übt das Verriegelungselement 19 eine Kraft auf die Druckfeder 18 aus und diese wird gespannt. Durch die Spannung der Druckfeder 18 wird auch das Sperrelement 9 in seine zweite Position verschoben, wodurch das gesamte System über die Druckfeder 18 verspannt ist.

In der zweiten Position kann der Monteur das Verriegelungselement 19 um seine Längsachse drehen und es somit verriegeln. Die Verriegelung des Verriegelungselements 19 wird durch einen Rasthaken realisiert, der sich nach Drehung des Verriegelungselements 19 an der Bewandung der Bohrung 16 im Klemmengehäuse 2 abstützt. Damit das Verriegelungselement 19 trotz des Rasthakens durch die Bohrung 16 gleiten kann, ist zusätzlich eine zum Rasthaken korrespondierende Nut vorgesehen. Um das Verriegelungselement 19 wieder zu entriegeln, wird das Verriegelungselement 19 so weit um seine Längsachse gedreht, bis der Rasthaken wieder in die Nut einschwenkt und durch die Bohrung 16 zurückgleiten kann.

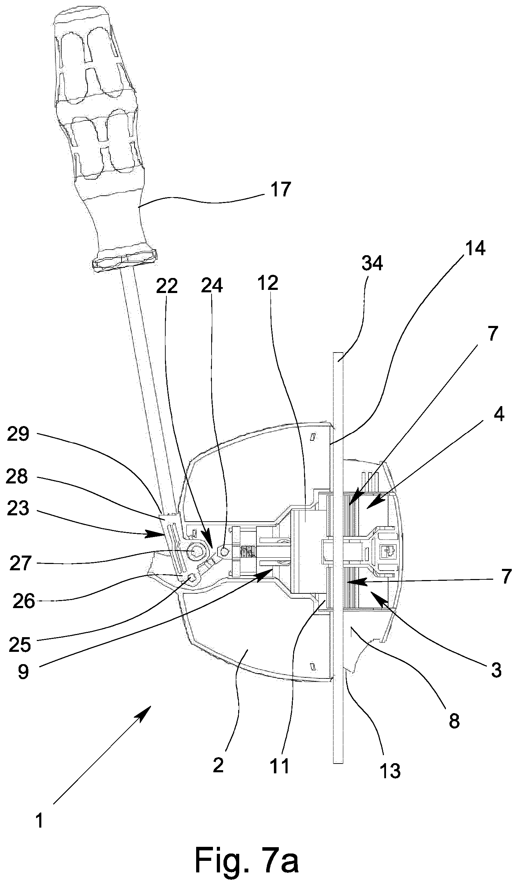

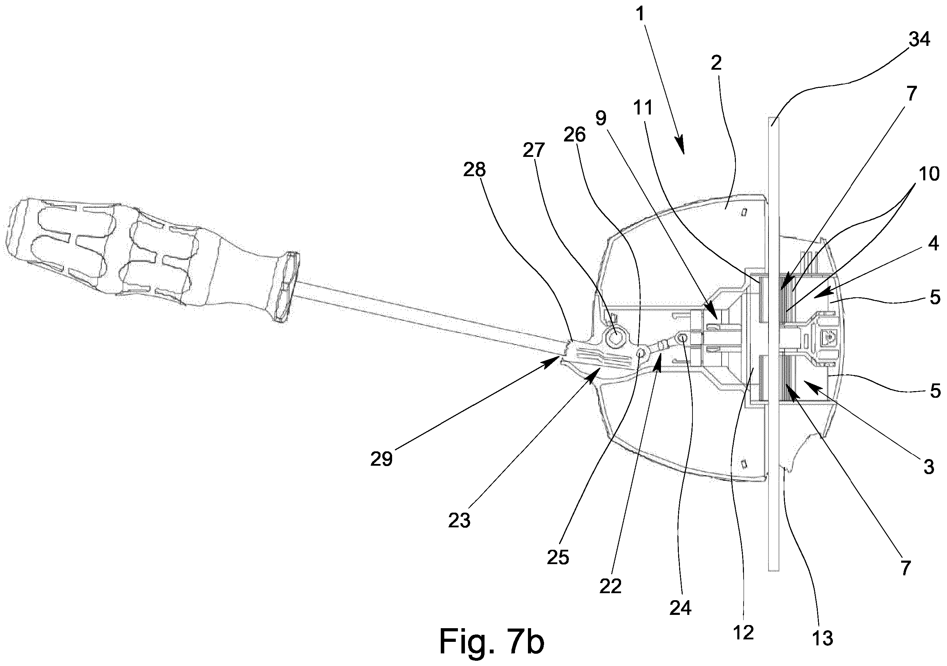

Bei dem Ausführungsbeispiel gemäß Fig. 7 ist das Betätigungselement als Hebelsystem ausgebildet, das zwei Hebel 22, 23 aufweist, die gelenkig miteinander verbunden sind. Im Einzelnen ist der erste Hebel 22 mit seinem ersten Ende 24 gelenkig mit dem Sperrelement 9 und mit seinem zweiten Ende 25 gelenkig mit dem ersten Ende 26 des zweiten Hebels 23 verbunden. Der zweite Hebel 23 ist über einen am Klemmengehäuse 2 ausgebildeten Drehzapfen 27 drehbar gelagert, wobei das zweite Ende 28 des zweiten Hebels 23 von außen zugänglich ist. Im zweiten Ende 28 des zweiten Hebels 23 ist außerdem eine Ausnehmung 29 ausgebildet, in die Spitze eines Schraubendrehers 17 eingesteckt werden kann, so dass der zweite Hebel 23 einfach mit Hilfe des Schraubendrehers 17 aus seiner ersten Position (Fig. 7a) in seine zweite Position (Fig. 7b) verschwenkt werden kann. Die zuvor beschriebene Anordnung der beiden Hebel 22, 23 sorgt dabei dafür, dass bei einem Verschwenken des zweiten Hebels 23 aus seiner ersten Position in seine zweite Position das Sperrelement 9 ebenfalls aus seiner ersten Position in seine zweite Position verbracht wird. Umgekehrt kann beim Verschwenken des zweiten Hebels 23 aus seiner zweiten Position in seine erste Position der Sperrhebel 9 mit geringem Aufwand aus seiner zweiten Position in seine erste Position zurückgezogen werden, in der der Sperrhebel 9 die Rastarme 3, 4 wieder freigibt, so dass die Befestigungsklemme 1 aus der Wandöffnung 33 herausgenommen werden kann.

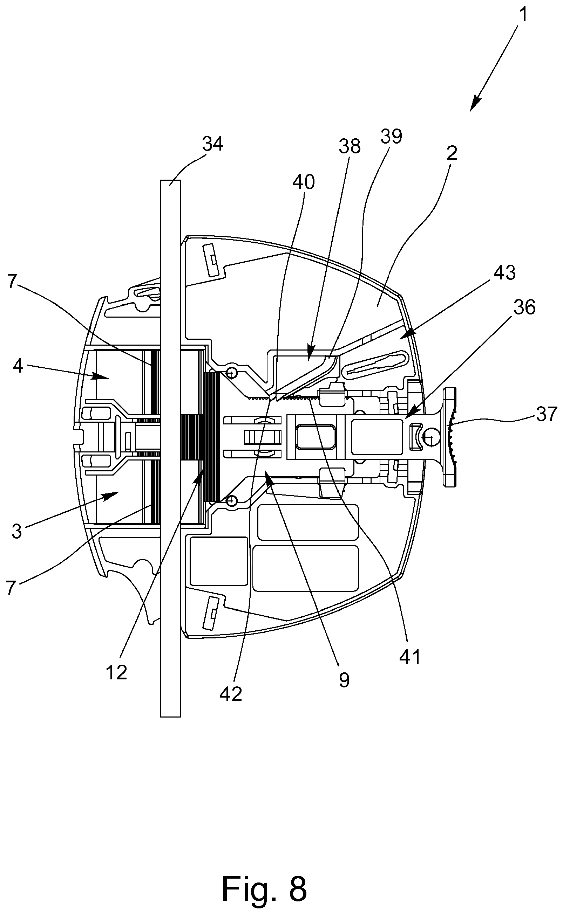

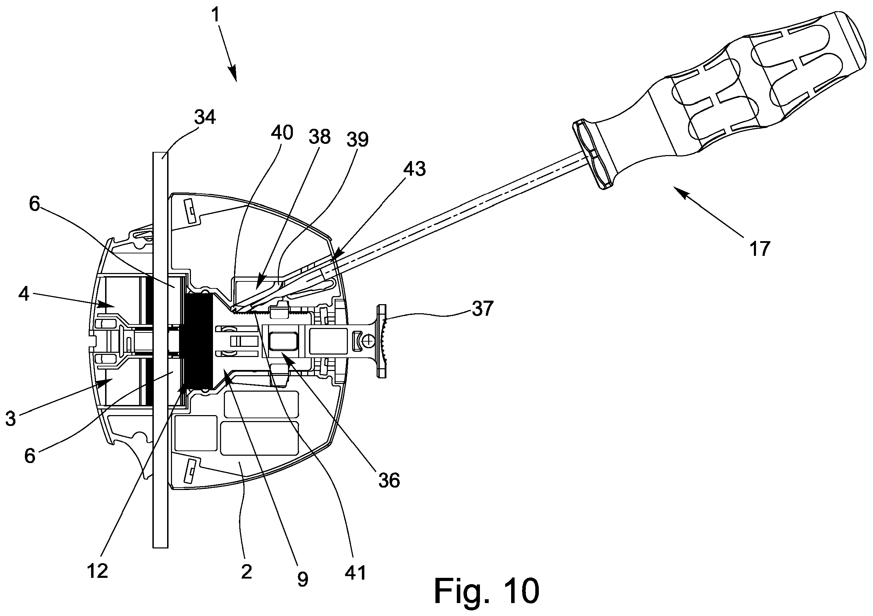

Die Figuren 8 - 10 zeigen eine weitere Ausführungsvariante, bei der ein Betätigungsabschitt 36 als Betätigungselement vorgesehen ist. Der Betätigungsabschnitt 36 ist dabei einstückig mit dem Sperrelement 9 verbunden, wobei das von dem Sperrelement 9 weg weisende, freie Ende 37 des Betätigungsabschitts 36 aus dem Klemmengehäuse 2 herausragt, so dass es von einem Monteur einfach mit ein oder zwei Fingern betätigt werden kann. Zum Verschieben des Sperrelements 9 aus seiner ersten Position (Fig. 10) in seine zweite Position (Fig. 8) muss das freie Ende 37 des Betätigungsabschnitts 36 nur mit einem Finger in Richtung des Klemmengehäuses 2 gedrückt werden. Damit das Sperrelement 9 in seiner zweiten Position gesichert und nicht ungewollt zurück in seine erste Position verrutschen kann, ist eine zusätzliche Rücklaufsperre vorgesehen. Hierzu ist im Klemmengehäuse 2 ein federnder Rastarm 38 angeordnet, der sich mit seinem einem Ende 39 am Klemmengehäuse 2 abstützt. Das zweite, freie Ende 40 des Rastarms 38 wirkt in der verrasteten Stellung mit einem Gegenrastelement zusammen, das am Sperrelement 9 ausgebildet ist. Bei dem dargestellten Ausführungsbeispiel wird das Gegenrastelement von einer Verzahnung 41 an einer Längskante des Sperrelements 9 gebildet, zu der am zweiten, freien Ende 40 des Rastarms 38 eine Gegenverzahnung 42 ausgebildet ist. Wenn die Verzahung 41 und die Gegenverzahnung 42 miteinander in Eingriff sind, ist das Sperrelement 9 somit in seiner zweiten Position sicher verrastet (Fig. 8).

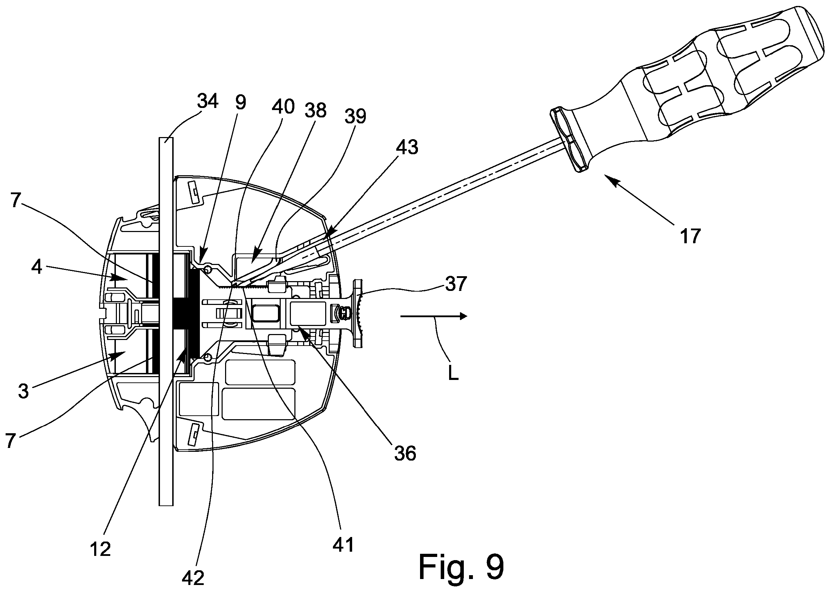

Um das Sperrelement 9 in die erste Position zu verschieben, muss zunächst die Verrastung gelöst werden, wozu das freie Ende 40 des Rastarms 38 mit seiner Gegenverzahnung 42 von der Verzahnung 41 am Sperrelement 9 abgehogen werden muss, d. h. der federnde Rastarm 38 muss ausgelenkt werden. Dies kann besonders einfach mit Hilfe eines Schraubendrehers 17 erfolgen, dessen Spitze in eine dazu vorgesehen Ausnehmung 43 im Klemmengehäuse 2 eingeschoben wird, wie dies in Fig. 9 dargestellt ist. Hierdurch wird der Rastarm 38 ausgelenkt, so dass die Verrastung gelöst ist. Dann kann von einem Monteur einfach mit zwei Fingern am Betätigungsabschnitt 36 in Richtung L gezogen werden, wodurch das Sperrelement 9 aus seiner zweiten Position in Richtung seiner ersten Position verschoben wird. In dieser gelösten Position des Sperrelements 9, die in Fig. 10 dargestellt ist, kann dann die Befestigungsklemme 1 aus der Wandöffnung 33 einer Gehäusewand 34 wieder herausgenommen werden, um beispielsweise einen defekten Reihenklemmenblock 32 auszutauschen und durch einen neuen zu ersetzen.

Wie zuvor bereits ausgeführt worden ist, zeigen die Fig. 1 und 2 eine Baueinheit 30 bestehend aus zwei Befestigungsklemmen 1 und vier Reihenklemmen 31, die zu einem Reihenklemmenblock 32 zusammengerastet sind. Hierzu weisen die Klemmengehäuse 35 der Reihenklemmen 31 zueinander korrespondierende Rastelemente, insbesondere Rastzapfen und Rastausnehmungen auf, mit deren Hilfe die scheibenförmigen Reihenklemmen 31 zusammengerastet werden können. Die Befestigung der Befestigungsklemmen 1 mit den benachbarten Reihenklemmen 31 erfolgt vorzugsweise ebenfalls über entsprechende Rastelemente, die in den Klemmengehäusen 2 der Befestigungsklemmen 1 bzw. in den Klemmengehäusen 35 der Reihenklemmen 31 ausgebildet sind.

Wie aus den Fig. 1 und 2 erkennbar ist, weisen die einzelnen Reihenklemmen 31 jeweils eine Öffnung 36 auf, in die der Stecker eines Prüf- oder Betriebssteckers eingesteckt werden kann. Die Öffnungen 36 sind dabei im montierten Zustand der Baueinheit 30 von der Bedienerseite aus zugänglich. In den Klemmengehäusen 35 der Reihenklemmen 31 sind jeweils zwei Leiteranschlusselemente und mindestens zwei Strombalken angeordnet, die jeweils einen Anschlussabschnitt und einen Kontaktabschnitt aufweisen. Bezüglich des möglichen konkreten Aufbaus der einzelnen Reihenklemmen 31 und der Anordnung und Ausgestaltung der Strombalken wird beispielhaft auf die DE 10 2015 114 186 A1 verwiesen.

## Patentansprüche

1. Befestigungsklemme (1) zur Fixierung eines aus mehreren Reihenklemmen (31) bestehenden Reihenklemmenblocks (32) in einer Wandöffnung (33) einer Gehäusewand (34), mit einem Klemmengehäuse (2) und mit mindestens einem Klemmelement, wobei das Klemmelement eine Klemmfläche aufweist,
wobei das Klemmelement als federnder Rastarm (3, 4) ausgebildet ist, der mit seinem Fußbreich (5) am Klemmengehäuse (2) befestigt ist und an dessen freien Ende (6) die Klemmfläche (7) ausgebildet ist, wobei sich der Rastarm (3, 4) entlang der Seitenfläche (8) des Klemmengehäuses (2) erstreckt, so dass die Klemmfläche (7) im montierten Zustand der Befestigungsklemme (1) gegen eine Kante der Wandöffnung (33) wirkt,
wobei ein Sperrelement (9) verschiebbar am Klemmengehäuse (2) angeordnet ist, das aus einer ersten Position in eine zweite Position verbringbar ist, wobei in der ersten Position des Sperrelements (9) der federnde Rastarme (3, 4) in Richtung der Seitenfläche (8) des Klemmengehäuses (2) auslenkbar ist,
**dadurch gekennzeichnet, dass** das Sperrelement (9) in seiner zweiten Position teilweise zwischen dem freien Ende (6) des federnden Rastarms (3, 4) und der Seitenfläche (8) des Klemmengehäuses (2) angeordnet ist, so dass der federnde Rastarme (3, 4) nicht in Richtung der Seitenfläche (8) des Klemmengehäuses (2) auslenkbar ist, und
wobei das Sperrelement (9) auf der dem freien Ende (6) des federnden Rastarms (3, 4) zugewandten Seite eine Schräge (12) aufweist.

2. Befestigungsklemme nach Anspruch 1, **dadurch gekennzeichnet, dass** die Schräge (12) am Sperrelement (9) eine Verzahnung und das freie Ende (6) des federnden Rastarms (3, 4) auf der der Schräge (12) zugewandten Seiten eine korrespondierende Gegenverzahnung aufweist.

3. Befestigungsklemme nach Anspruch 1 oder 2, **dadurch gekennzeichnet, dass** im Klemmengehäuse (2) eine Einlegeschräge (13) ausgebildet ist, mit der das Klemmengehäuse (2) im montierten Zustand der Befestigungsklemme (1) auf der unteren Innenkante der Wandöffnung (33) aufsitzt.

4. Befestigungsklemme nach einem der Ansprüche 1 bis 3, **dadurch gekennzeichnet, dass** am Klemmengehäuse (2) eine Anlagefläche (14) ausgebildet ist, die sich vorzugsweise senkrecht zur Seitenfläche (8) des Klemmengehäuses (2) erstreckt.

5. Befestigungsklemme nach einem der Ansprüche 1 bis 4, **dadurch gekennzeichnet, dass** zwei federnde Rastarme (3, 4) ausgebildet sind, die jeweils mit ihrem Fußbereich (5) am Klemmengehäuse (2) befestigt sind und die sich beide entlang der Seitenfläche (8) des Klemmengehäuses (2) erstrecken, wobei die beiden Rastarme (3, 4) senkrecht zur Erstreckungsrichtung (E) der Befestigungsklemme (1) nebeneinander angeordnet sind.

6. Befestigungsklemme nach einem der Ansprüche 1 bis 5, **dadurch gekennzeichnet, dass** das Sperrelement (9) mit Hilfe eines Betätigungselements sowohl aus der ersten Position in die zweite Position als auch aus der zweiten Position in die erste Position verbringbar ist.

7. Befestigungsklemme nach Anspruch 6, **dadurch gekennzeichnet, dass** als Betätigungselement eine Schraube (15) in einer von außen zugänglichen Bohrung (16) im Klemmengehäuse (2) angeordnet ist, und dass im Sperrelement (9) ein Gewinde ausgebildet ist, in das das Ende der Schraube (15) eingeschraubt ist, wobei die Bohrung (16) derart ausgebildet ist, dass die Schraube (15) in Längsrichtung fixiert ist, so dass ein Verdrehen der Schraube (15) ein axiales Verschieben des Sperrelements (9) bewirkt.

8. Befestigungsklemme nach Anspruch 6, **dadurch gekennzeichnet, dass** als Betätigungselement eine federgespannte Verriegelungseinheit vorgesehen ist, dass die Verriegelungseinheit eine Druckfeder (18) und ein Verriegelungselement (19) umfasst, dass das Verriegelungselement (19) einen Verriegelungsabschnitt (20) und einen Griffabschnitt (21) oder einen Betätigungsabschnitt aufweist, wobei der Verriegelungsabschnitt (20) teilweise in einer Bohrung (16) im Klemmengehäuse (2) angeordnet ist,
dass die Druckfeder (18) mit ihrem einen Ende am Verriegelungsabschnitt (20) und mit ihrem anderen Ende an dem Sperrelement (9) angeordnet ist, dass das Verriegelungselement (19) von einer ersten Position in Erstreckungsrichtung E der Befestigungsklemme (1) in eine zweite Position verbringbar ist, dass das Verriegelungselement (19) in der zweiten Position eine Kraft auf die Druckfeder (18) ausübt, so dass die Druckfeder (18) gespannt ist und das Sperrelement (9) in seine zweite Position verbringt und dass das Verriegelungselement (19) in seiner zweiten Position durch Drehung des Verriegelungselements (19) um seine Längsachse arretierbar ist.

9. Befestigungsklemme nach Anspruch 8, **dadurch gekennzeichnet, dass** am Verriegelungsabschnitt (20) ein Rasthaken vorgesehen ist, dass in der Bohrung (16) mindestens eine zum Rasthaken korrespondierende Nut vorgesehen ist, wobei der Rasthaken in der ersten Position des Verriegelungselements (19) mit der Nut im Eingriff ist und in der zweiten Position des Verriegelungselements (19) aus der Bohrung (16) und der Nut in Richtung des Inneren des Klemmengehäuses (2) herausgetreten ist und dass der Rasthaken durch Drehung des Verriegelungselements (19) um seine Längsachse an einem Vorsprung im Klemmengehäuse (2) anlegbar ist.

10. Befestigungsklemme nach Anspruch 6, **dadurch gekennzeichnet, dass** als Betätigungselement ein Hebelsystem mit zwei Hebeln (22, 23) vorgesehen ist, dass der erste Hebel (22) mit seinem ersten Ende (24) gelenkig mit dem Sperrelement (9) und mit seinem zweiten Ende (25) gelenkig mit dem ersten Ende (26) des zweiten Hebels (23) verbunden ist, dass der zweite Hebel (23) drehbar am Klemmengehäuse (2) gelagert ist und das zweite Ende (28) des zweiten Hebels (23) von außen zugänglich ist und dass der zweite Hebel (23) aus einer ersten Position in eine zweite Position verschwenkbar ist, wobei sich das Sperrelement (9) in der ersten Position des zweiten Hebels (23) in seiner ersten Position und in der zweiten Position des zweiten Hebels (23) in seiner zweiten Position befindet.

11. Befestigungsklemme nach Anspruch 10, **dadurch gekennzeichnet, dass** in dem zweiten Ende (28) des zweiten Hebels (23) eine Ausnehmung (29) zum Einstecken eines Hilfsmittels ausgebildet ist.

12. Befestigungsklemme nach Anspruch 6, **dadurch gekennzeichnet, dass** als Betätigungselement ein Betätigungsabschitt (36) vorgesehen ist, der mit dem Sperrelement (9) verbunden ist und dass das vom Sperrelement (9) weg weisende, freie Ende (37) des Betätigungsabschitts (36) von außerhalb des Klemmengehäuses (2) zugänglich ist.

13. Befestigungsklemme nach Anspruch 12, **dadurch gekennzeichnet, dass** ein federnder Rastarm (38) vorgesehen ist, der sich mit seinem einen Ende (39) am Klemmengehäuse (2) abstützt und mit seinem zweiten, freien Ende (40) mit einem Gegenrastelement zusammenwirkt, das am Sperrelement (9) oder am Betätigungsabschnitt (36) ausgebildet ist, so dass das Sperrelement (9 in seiner zweiten Position verrastet, wenn das freie Ende (40) des Rastarms (38) und das Gegenrastelement miteinander in Eingriff sind.

14. Befestigungsklemme nach Anspruch 13, **dadurch gekennzeichnet, dass** das Gegenrastelement als Verzahnung (41) ausgebildet ist und am zweiten, freien Ende (40) des Rastarms (38) eine Gegenverzahnung (42) ausgebildet ist, wobei die Verzahung (41) und die Gegenverzahnung (42) vorzugsweise so zueinander ausgerichtet sind, dass das Sperrelement (9) aus seiner ersten Position in seine zweite Position verbringbar ist, auch wenn die Verzahung (41) und die Gegenverzahnung (42) miteinander in Eingriff sind, während das Sperrelement (9) nur dann aus seiner zweiten Position in seine erste Position verbringbar ist, wenn die Verzahung (41) und die Gegenverzahnung (42) nicht miteinander in Eingriff sind.

15. Baueinheit (30) bestehend aus zwei Befestigungsklemmen (1) nach einem der Ansprüche 1 bis 14 und einem aus mehreren nebeneinander angeordneten Reihenklemmen (31) bestehenden Reihenklemmenblock (32), wobei die Reihenklemmen (31) zwischen den Befestigungsklemmen (1) angeordnet sind und jeweils ein Klemmengehäuse (35) mit mindestens zwei darin angeordneten Leiteranschlusselementen aufweisen.

16. Baueinheit nach Anspruch 15, **dadurch gekennzeichnet, dass** die Befestigungsklemmen (1) über an ihren Klemmengehäusen (2) ausgebildete Rastelemente, insbesondere über Rastzapfen und/oder Rastausnehmungen, jeweils mechanisch mit der benachbarten Reihenklemme (31) verbunden sind, wozu im Klemmengehäuse (35) der Reihenklemmen (31) korrespondierende Rastausnehmungen und/oder Rastzapfen ausgebildet sind.

## Claims

1. Fastening clamp (1) for securing a modular terminal block (32) consisting of several terminals (31) in a wall opening (33) of a housing wall (34), having a clamp housing (2) and at least one clamping element, wherein the clamping element has a clamping surface,
wherein the clamping element is designed as an elastic locking arm (3, 4) which is fastened with its foot region (5) to the clamp housing (2) and at whose free end (6) the clamping surface (7) is formed, wherein the locking arm (3, 4) extends along the side surface (8) of the clamp housing (2) such that, in the mounted state of the fastening clamp (1), the clamping surface (7) acts against an edge of the wall opening (33),
wherein a locking element (9) is arranged displaceably on the clamp housing (2), which can be moved from a first position to a second position, wherein in the first position of the locking element (9), the elastic locking arm (3, 4) is deflectable towards the side surface (8) of the clamp housing (2),
**characterized in**
**that** in its second position, the locking element (9) is arranged partially between the free end (6) of the elastic locking arm (3, 4) and the side surface (8) of the clamp housing (2), such that the elastic locking arm (3, 4) is not deflectable towards the side surface (8) of the clamp housing (2), and
wherein the locking element (9) has an inclined surface (12) on the side facing the free end (6) of the elastic locking arm (3, 4).

2. Fastening clamp according to claim 1, **characterized in that** the inclined surface (12) on the locking element (9) has a toothing and that the free end (6) of the elastic locking arm (3, 4) has a corresponding counter-toothing on the side facing the inclined surface (12).

3. Fastening clamp according to claims 1 or 2, **characterized in that** an insertion slope (13) is formed in the clamp housing (2), by means of which the clamp housing (2) rests on the lower inner edge of the wall opening (33) in the mounted state of the fastening clamp (1).

4. Fastening clamp according to any one of claims 1 to 3, **characterized in that** a contact surface (14) is formed on the clamp housing (2), which preferably extends perpendicular to the side surface (8) of the clamp housing (2).

5. Fastening clamp according to any one of claims 1 to 4, **characterized in that** two elastic locking arms (3, 4) are formed, each fastened with their foot region (5) to the clamp housing (2) and both extending along the side surface (8) of the clamp housing (2), wherein the two locking arms (3, 4) are arranged side by side perpendicular to the longitudinal direction (E) of the fastening clamp (1).

6. Fastening clamp according to any one of claims 1 to 5, **characterized in that** the locking element (9) can be moved both from the first position into the second position and from the second position into the first position by means of an actuating element.

7. Fastening clamp according to claim 6, **characterized in that** a screw (15) is arranged as the actuating element in a bore (16) in the clamp housing (2) accessible from the outside, and that a thread is formed in the locking element (9), into which the end of the screw (15) is screwed, wherein the bore (16) is designed such that the screw (15) is fixed in the longitudinal direction, so that rotation of the screw (15) causes an axial displacement of the locking element (9).

8. Fastening clamp according to claim 6, **characterized in that** a springloaded locking unit is provided as the actuating element, wherein the locking unit comprises a compression spring (18) and a locking element (19), wherein the locking element (19) has a locking section (20) and a grip section (21) or an actuating section, wherein the locking section (20) is partially arranged in a bore (16) in the clamp housing (2),
that the compression spring (18) is arranged with one end on the locking section (20) and with the other end on the locking element (9), that the locking element (19) can be moved from a first position in the longitudinal direction (E) of the fastening clamp (1) into a second position, that in the second position the locking element (19) exerts a force on the compression spring (18) so that the compression spring (18) is tensioned and moves the locking element (9) into its second position, and that the locking element (19) can be locked in its second position by rotating the locking element (19) about its longitudinal axis.

9. Fastening clamp according to claim 8, **characterized in that** a locking hook is provided on the locking section (20), that at least one groove corresponding to the locking hook is provided in the bore (16), wherein the locking hook in the first position of the locking element (19) engages with the groove and in the second position of the locking element (19) exits from the bore (16) and the groove towards the interior of the clamp housing (2), and that the locking hook can be positioned against a projection in the clamp housing (2) by rotation of the locking element (19) about its longitudinal axis.

10. Fastening clamp according to claim 6, **characterized in that** a lever system with two levers (22, 23) is provided as the actuating element, wherein the first lever (22) is pivotally connected with its first end (24) to the locking element (9) and with its second end (25) to the first end (26) of the second lever (23), that the second lever (23) is rotatably mounted on the clamp housing (2), and that the second end (28) of the second lever (23) is accessible from outside, and that the second lever (23) can be pivoted from a first position into a second position, wherein the locking element (9) is in its first position when the second lever (23) is in its first position and in its second position when the second lever (23) is in its second position.

11. Fastening clamp according to claim 10, **characterized in that** a recess (29) for inserting a tool is formed in the second end (28) of the second lever (23).

12. Fastening clamp according to claim 6, **characterized in that** an actuating section (36) is provided as the actuating element, which is connected to the locking element (9) and that the free end (37) of the actuating section (36), which faces away from the locking element (9), is accessible from outside the clamp housing (2).

13. Fastening clamp according to claim 12, **characterized in that** an elastic locking arm (38) is provided, which is supported with one end (39) on the clamp housing (2) and interacts with its second, free end (40) with a counter-locking element formed on the locking element (9) or on the actuating section (36), so that the locking element (9) locks into its second position when the free end (40) of the locking arm (38) and the counter-locking element engage with each other.

14. Fastening clamp according to claim 13, **characterized in that** the counter-locking element is formed as a toothing (41) and that a counter-toothing (42) is formed on the second, free end (40) of the locking arm (38), wherein the toothing (41) and the counter-toothing (42) are preferably aligned in such a way that the locking element (9) can be moved from its first position into its second position even when the toothing (41) and the counter-toothing (42) are engaged, while the locking element (9) can only be moved from its second position into its first position when the toothing (41) and the counter-toothing (42) are not engaged.

15. Component (30) consisting of two fastening clamps (1) according to one of claims 1 to 14 and a modular terminal block (32) consisting of several terminals (31) arranged next to each other, wherein the terminals (31) are arranged between the fastening clamps (1) and each have a terminal housing (35) with at least two conductor connection elements arranged therein.

16. Component according to claim 15, **characterized in that** the fastening clamps (1) are mechanically connected to the adjacent terminal (31) via locking elements formed on their clamp housings (2), in particular via locking pins and/or locking recesses, for which corresponding locking recesses and/or locking pins are formed in the terminal housing (35) of the terminals (31).

## Revendications

1. Pince de fixation (1) pour la fixation d'un bloc de bornes en série (32) constitué par plusieurs bornes en série (31) dans une ouverture de paroi (33) d'une paroi de boîtier (34), présentant un boîtier de serrage (2) et au moins un élément de serrage, l'élément de serrage présentant une surface de serrage,
l'élément de serrage étant conçu sous forme de bras d'encliquetage à ressort (3, 4), qui est fixé au niveau de sa base (5) au boîtier de serrage (2) et qui présente, au niveau de son extrémité libre (6), la surface de serrage (7), le bras d'encliquetage (3, 4) s'étendant le long de la surface latérale (8) du boîtier de serrage (2) de telle sorte que la surface de serrage (7) agisse, dans l'état monté de la pince de fixation (1), contre un bord de l'ouverture de paroi (33),
un élément de blocage (9), qui peut être amené d'une première position à une deuxième position, étant disposé de manière coulissante sur le boîtier de serrage (2), la première position de l'élément de blocage (9) permettant au bras d'encliquetage à ressort (3, 4) d'être dévié vers la surface latérale (8) du boîtier de serrage (2),
**caractérisé en ce que**
l'élément de blocage (9) est disposé, dans sa deuxième position, partiellement entre l'extrémité libre (6) du bras d'encliquetage à ressort (3, 4) et la surface latérale (8) du boîtier de serrage (2), de sorte que le bras d'encliquetage à ressort (3, 4) ne peut pas être dévié vers la surface latérale (8) du boîtier de serrage (2), et
l'élément de blocage (9) présentant un biseau (12) sur le côté faisant face à l'extrémité libre (6) du bras d'encliquetage à ressort (3, 4).

2. Pince de fixation selon la revendication 1, **caractérisée en ce que**, le biseau (12) sur l'élément de blocage (9) présente une denture et l'extrémité libre (6) du bras d'encliquetage à ressort (3, 4) présente une contre-denture correspondante sur le côté faisant face au biseau (12).

3. Pince de fixation selon la revendication 1 ou 2, **caractérisée en ce qu'**un biseau d'insertion (13) est formé dans le boîtier de serrage (2), par lequel le boîtier de serrage (2) repose sur le bord intérieur inférieur de l'ouverture de paroi (33) dans l'état monté de la pince de fixation (1).

4. Pince de fixation selon l'une des revendications 1 à 3, **caractérisée en ce qu'**au niveau du boîtier de serrage (2), est formée une surface d'appui (14) qui s'étend de préférence perpendiculairement à la surface latérale (8) du boîtier de serrage (2).

5. Pince de fixation selon l'une des revendications 1 à 4, **caractérisée en ce que** deux bras d'encliquetage à ressort (3, 4) sont formés, lesquels sont respectivement fixés au niveau de leur base (5) au boîtier de serrage (2) et qui s'étendent tous deux le long de la surface latérale (8) du boîtier de serrage (2), les deux bras d'encliquetage (3, 4) étant agencés côte à côte perpendiculairement à la direction d'extension (E) de la pince de fixation (1).

6. Pince de fixation selon l'une des revendications 1 à 5, **caractérisée en ce que** l'élément de blocage (9) peut être déplacé à l'aide d'un élément d'actionnement à la fois de la première position à la deuxième position et de la deuxième position à la première position.

7. Pince de fixation selon la revendication 6, **caractérisée en ce qu'**en tant qu'élément d'actionnement, une vis (15) est agencée dans un perçage (16) accessible de l'extérieur dans le boîtier de serrage (2), et **en ce qu'**un filetage dans lequel est vissée l'extrémité de la vis (15) est formé dans l'élément de blocage (9), le perçage (16) étant formé de telle sorte que la vis (15) est fixée dans le sens longitudinal afin qu'une rotation de la vis (15) provoque un déplacement axial de l'élément de blocage (9).

8. Pince de fixation selon la revendication 6, **caractérisée en ce qu'**il est prévu en tant qu'élément d'actionnement une unité de verrouillage à ressort, **en ce que** l'unité de verrouillage comprend un ressort de compression (18) et un élément de verrouillage (19), **en ce que** l'élément de verrouillage (19) présente une partie de verrouillage (20) et une partie formant poignée (21) ou une partie d'actionnement, la partie de verrouillage (20) étant partiellement agencée dans un perçage (16) ménagé dans le boîtier de serrage (2),
**en ce que** le ressort de compression (18) est agencé, par l'une de ses extrémités, sur la partie de verrouillage (20) et, par son autre extrémité, sur l'élément de blocage (9), **en ce que** l'élément de verrouillage (19) peut être déplacé d'une première position dans la direction d'extension E de la pince de fixation (1) à une deuxième position, **en ce que** l'élément de verrouillage (19), dans la deuxième position, exerce une force sur le ressort de compression (18), de sorte que le ressort de compression (18) est tendu et amène l'élément de blocage (9) dans sa deuxième position, et **en ce que** l'élément de verrouillage (19) peut être verrouillé dans sa deuxième position par rotation de l'élément de verrouillage (19) autour de son axe longitudinal.

9. Pince de fixation selon la revendication 8, **caractérisée en ce qu'**il est prévu sur la partie de verrouillage (20) un crochet d'encliquetage, **en ce qu'**il est prévu dans le perçage (16) au moins une rainure correspondant au crochet d'encliquetage, le crochet d'encliquetage étant en prise avec la rainure dans la première position de l'élément de verrouillage (19) et étant sorti du perçage (16) et de la rainure dans la direction de l'intérieur du boîtier de serrage (2) dans la deuxième position de l'élément de verrouillage (19), et **en ce que** le crochet d'encliquetage peut être appliqué contre une protubérance dans le boîtier de serrage (2) par rotation de l'élément de verrouillage (19) autour de son axe longitudinal.

10. Pince de fixation selon la revendication 6, **caractérisée en ce qu'**il est prévu, en tant qu'élément d'actionnement, un système de levier comprenant deux leviers (22, 23), **en ce que** le premier levier (22) est relié de manière articulée par sa première extrémité (24) à l'élément de blocage (9) et par sa deuxième extrémité (25) de manière articulée à la première extrémité (26) du deuxième levier (23), **en ce que** le deuxième levier (23) est monté de manière rotative sur le boîtier de serrage (2) et **en ce que** la deuxième extrémité (28) du deuxième levier (23) est accessible de l'extérieur, et **en ce que** le deuxième levier (23) peut être basculé d'une première position à une deuxième position, l'élément de blocage (9) se trouvant à sa première position dans la première position du deuxième levier (23) et à sa deuxième position dans la deuxième position du deuxième levier (23).

11. Pince de fixation selon la revendication 10, **caractérisée en ce qu'**une cavité (29) permettant l'insertion d'un outil auxiliaire est formée dans la deuxième extrémité (28) du deuxième levier (23).

12. Pince de fixation selon la revendication 6, **caractérisée en ce qu'**il est prévu, en tant qu'élément d'actionnement, une partie d'actionnement (36) qui est reliée à l'élément de blocage (9), et **en ce que** l'extrémité libre (37) de la partie d'actionnement (36) s'éloignant de l'élément de blocage (9) est accessible depuis l'extérieur du boîtier de serrage (2).

13. Pince de fixation selon la revendication 12, **caractérisée en ce qu'**il est prévu un bras d'encliquetage à ressort (38) qui s'appuie par sa première extrémité (39) sur le boîtier de serrage (2) et qui coopère par sa deuxième extrémité libre (40) avec un contre-élément d'encliquetage qui est formé sur l'élément de blocage (9) ou sur la partie d'actionnement (36), de sorte que l'élément de blocage (9) est verrouillé dans sa deuxième position lorsque l'extrémité libre (40) du bras d'encliquetage (38) et le contre-élément d'encliquetage sont en prise l'un avec l'autre.

14. Pince de fixation selon la revendication 13, **caractérisée en ce que** le contre-élément d'encliquetage est conçu sous forme de denture (41) et qu'une contre-denture (42) est formée à la deuxième extrémité libre (40) du bras d'encliquetage (38), la denture (41) et la contre-denture (42) étant de préférence alignées l'une par rapport à l'autre de sorte que l'élément de blocage (9) peut être déplacé de sa première position à sa deuxième position, même lorsque la denture (41) et la contre-denture (42) sont en prise l'une avec l'autre, tandis que l'élément de blocage (9) ne peut être déplacé de sa deuxième position à sa première position que lorsque la denture (41) et la contre-denture (42) ne sont pas en prise l'une avec l'autre.

15. Ensemble (30) composé de deux pinces de fixation (1) selon l'une des revendications 1 à 14 et d'un bloc de bornes en série (32) constitué de plusieurs bornes en série (31) agencées côte à côte, les bornes en série (31) étant agencées entre les pinces de fixation (1) et présentant respectivement un boîtier à bornes (35) comprenant au moins deux éléments de connexion de conducteurs agencés à l'intérieur de celui-ci.

16. Ensemble selon la revendication 15, **caractérisé en ce que** les pinces de fixation (1) sont respectivement reliées mécaniquement à la borne en série (31) adjacente par l'intermédiaire d'éléments d'encliquetage formés sur leurs boîtiers de serrage (2), notamment par l'intermédiaire de tenons d'encliquetage et/ou d'évidements d'encliquetage, des évidements d'encliquetage et/ou des tenons d'encliquetage correspondants étant formés à cet effet dans le boîtier à bornes (35) des bornes en série (31).
